# EUROPEAN PATENT APPLICATION

(11) **EP 4 797 223 A1**
(43) Date of publication of application: **26.08.2026**
(21) Application number: 25775499.4
(22) Date of filing: 06.02.2025
(51) Int. Cl.: G06V 10/98, G06V 10/82, G06V 10/77, G06V 10/46, G06V 20/40, G06V 10/30, G06V 10/25

(54) **ELECTRONIC DEVICE FOR OUTPUTTING QUALITY OF IMAGE AS SCORE AND CONTROL METHOD THEREOF**

(30) Priority: 26.03.2024 KR 20240041169; 12.07.2024 KR 20240092138
(71) Applicant: Samsung Electronics Co., Ltd., Suwon-si, Gyeonggi-do 16677 (KR)
(72) Inventor: KIM, Namuk, Suwon-si Gyeonggi-do 16677 (KR); KIM, Wookhyung, Suwon-si Gyeonggi-do 16677 (KR); CHO, Ilhyun, Suwon-si Gyeonggi-do 16677 (KR); HAHM, Cheulhee, Suwon-si Gyeonggi-do 16677 (KR)
(74) Representative: Appleyard Lees IP LLP
(86) International application number: PCT/KR2025/001793
(87) International publication number: WO 2025/206566

(57) **Abstract**

This electronic device may comprise: a memory storing a first neural network model trained to output a saliency map for an image and a second neural network model trained to output a quality score of the image; and a processor connected to the memory and configured to obtain a saliency map including saliency values of a plurality of pixels included in the first image through the first neural network model on the basis of the first image, identify a plurality of first fragments respectively corresponding to a plurality of grids, included in the first image on the basis of the saliency map, and obtain a quality score for the first image through the second neural network model on the basis of the plurality of identified first fragments, wherein the quality score is based on a plurality of first quality scores respectively corresponding to the plurality of identified first fragments.

## Description

### [Technical Field]

The present disclosure relates to an electronic apparatus and a control method thereof, and more particularly, to an electronic apparatus for outputting an image quality as a score and a control method thereof.

### [Background Art]

In accordance with the development of electronic apparatuses and multimedia technology, an amount of video service usage by consumers is rapidly increasing, and the consumers' expectations for quality of experience (QoE) are also increasing. The consumer is the final determiner of the video, and a provider needs to predict a video quality that the consumer is to feel in order to improve the QoE.

Accordingly, a robust image/video quality assessment (I/VQA) technique is being developed to provide the consumer with a high-quality video service.

### [Disclosure]

### [Technical Solution]

I accordance with the present disclosure, an electronic apparatus may inlcude: at least one memory storing: a first neural network model trained to output a saliency map for an image, and a second neural network model trained to output a quality score for an image; and at least one processor connected to the at least one memory and configured to: obtain the saliency map including a saliency value of each pixel of a plurality of pixels included in a first image through the first neural network model based on the first image, identify a plurality of first sub-regions respectively corresponding to a plurality of regions included in the first image based on the saliency map, and obtain the quality score for the first image through the second neural network model based on the identified plurality of first sub-regions, wherein the quality score is based on a plurality of first quality scores respectively corresponding to the identified plurality of first sub-regions**.**

The at least one processor may be further configured to identify a portion of each region of the plurality of regions as a first sub-region of the plurality of first sub-regions corresponding to the plurality of regions based on saliency values of pixels respectively included in each region of the plurality of regions.

The at least one processor may be further configured to: for each region of the plurality of regions, determine a plurality of first sum values corresponding to each pixel respectively included in each region, each first sum value of the plurality of first sum values being a sum of a saliency value of the pixel and saliency values of surrounding pixels of each pixel, and identify a sub-region of each region that includes a reference pixel corresponding to a largest first sum value among the plurality of first sum values as the first sub-region corresponding to each region.

The second neural network model may be further trained to output the plurality of first quality scores based on the plurality of first sub-regions and a plurality of second sum values being input to the second neural network model, and the at least one processor may be further configured to: determine the plurality of second sum values respectively corresponding to the plurality of first sub-regions, each second sum value of the plurality of second sum values being a sum of saliency values of pixels included in a respectively corresponding first sub-region of the plurality of first sub-regions, and obtain the quality score for the first image through the second neural network model based on the identified plurality of first sub-regions **and** the plurality of second sum values**.**

The at least one processor may be further configured to: obtain **a** plurality of saliency map**s** respectively corresponding to **a** plurality of frames through the first neural network model, and identify a frame of the plurality of frames as the first image based on the plurality of saliency maps output by the first neural network model.

The at least one processor may be further configured to: determine a plurality of third sum values respectively corresponding to the plurality of regions, each third sum value of the plurality of third sum values being a sum of saliency values of pixels included in a respectively corresponding region of the plurality of regions, and identify as an additional first sub-region a region of the plurality of regions corresponding to a third sum value of the plurality of third sum values being a predetermined size or more among.

The at least one processor may be further configured to: determine a plurality of third sum values respectively corresponding to the plurality of regions, each third sum value of the plurality of third sum values being a sum of saliency values of pixels included in a respectively corresponding region of the plurality of regions, and update a size of a region of the plurality of regions based on the plurality of third sum values.

The first image may be a first frame of a plurality of frames, a second image may be a second frame of the plurality of frames that occurs immediately after the first frame of the plurality of frames, and the at least one processor may be further configured to: determine a motion vector based on the first image and the second image, identify a plurality of second sub-regions of the second image corresponding to the plurality of first sub-regions and the motion vector, and obtain **a** quality score for the **second** image through the second neural network model based on the identified plurality of second sub-regions**.**

The at least one processor may be further configured to perform at least one of upscaling or noise removal on the first image based on the quality score for the first image.

The first neural network model may learn a plurality of first sample images and a plurality of sample saliency maps respectively corresponding to the plurality of first sample images, and the second neural network model may learn a plurality of second sample images and a plurality of sample scores respectively corresponding to the plurality of second sample images.

Each sample saliency map of a plurality of sample saliency maps may be based on a plurality of user gazes for first sample images respectively corresponding to the plurality of sample saliency maps, and each sample score of a plurality of sample scores may be based on a plurality of user scores for second sample images respectively corresponding to the plurality of sample scores.

In accordance with the present disclosure, a control method of an electronic apparatus storing therein a first neural network model trained to output a saliency map for an image, and a second neural network model trained to output a quality score for an image, and the electronic apparatus further including at least one processor, the control method may include: by the at least one processor, obtai**ning** the saliency map including a saliency value of each pixel of a plurality of pixels included in a first image through the first neural network model based on a first image, identifying a plurality of first sub-regions respectively corresponding to a plurality of regions included in the first image based on the saliency map, and obtaining the quality score for the first image through the second neural network model based on the identified plurality of first sub-regions**,** wherein the quality score is based on a plurality of first quality scores respectively corresponding to the identified plurality of first sub-regions**.**

The identifying the plurality of first sub-regions may further include: by the at least one processor, identifying a portion of each region of the plurality of regions as a first sub-region of the plurality of first sub-regions corresponding to the plurality of regions based on saliency values of pixels respectively included in each region of the plurality of regions.

The identifying the first sub-region may further include: by the at least one processor, for each region of the plurality of regions, determining a plurality of first sum values corresponding to each pixel respectively included in each region, each first sum value of the plurality of first sum values being determined by summing a saliency values of each pixel and saliency values of surrounding pixels of each pixel, and identifying a sub-region of each region that includes a reference pixel corresponding to a largest first sum value among the plurality of first sum values as the first sub-region corresponding to each region.

The second neural network model may be further trained to output the plurality of first quality scores based on the plurality of first sub-regions and a plurality of second sum values being input to the second neural network model, the control method may further include: by the at least one processor, determining the plurality of second sum values respectively corresponding to the plurality of first sub-regions, each second sum value of the plurality of second sum values being determined by summing saliency values of pixels included in a respectively corresponding first sub-region of the plurality of first sub-regions, and the obtaining the quality score for the first image may further include: obtaining the quality score for the first image through the second neural network model based on the identified plurality of first sub-regions and the plurality of second sum values.

The method may further include acquiring the plurality of saliency maps respectively corresponding to a plurality of frames through the first neural network model, and identifying one of the plurality of frames as the first image based on the plurality of saliency maps.

The method may further include acquiring a plurality of third sum values respectively corresponding to the plurality of regions by summing the saliency values of the pixels respectively included in the plurality of regions, wherein in the identifying of the plurality of first sub-regions, the additional first sub-region is identified in a region corresponding to the third sum value having a predetermined size or more among the plurality of third sum values.

The method may further include acquiring a plurality of third sum values respectively corresponding to the plurality of regions by summing the saliency values of the pixels respectively included in the plurality of regions, and updating sizes of the plurality of regions based on the plurality of third sum values.

The first image may be one of a plurality of frames, and the method may further include acquiring a motion vector based on the first image among the plurality of frames and a second image immediately after the first image, identifying a plurality of second sub-regions corresponding to the second image based on the plurality of first sub-regions and the motion vector, obtaining a quality score for the second image through the second neural network model based on the identified plurality of second sub-regions.

The method may further include performing at least one of upscaling or noise removal on the first image based on the quality of the first image.

The first neural network model may be a model acquired by learning a plurality of first sample images and a plurality of sample saliency maps respectively corresponding to the plurality of first sample images, and the second neural network model may be a model acquired by learning a plurality of second sample images and a plurality of sample scores respectively corresponding to the plurality of second sample images.

Each of a plurality of sample saliency maps may be acquired based on a plurality of user gazes for first sample images respectively corresponding to a plurality of sample saliency maps, and each of a plurality of sample scores may be acquired based on a plurality of user scores for second sample images respectively corresponding to the plurality of sample scores.

### [Description of Drawings]

FIG. 1 is a diagram for describing image/video quality assessment (I/VQA) to assist in understanding the present disclosure.
FIG. 2 is a block diagram showing a configuration of an electronic apparatus according to an embodiment of the present disclosure.
FIG. 3 is a block diagram showing a detailed configuration of the electronic apparatus according to an embodiment of the present disclosure.
FIG. 4 is a diagram for describing a difference in methods for identifying a sub-region according to an embodiment of the present disclosure.
FIG. 5 is a diagram for describing the method for identifying a sub-region based on a saliency map according to an embodiment of the present disclosure.
FIG. 6 is a diagram for describing an overall method for identifying an image quality according to an embodiment of the present disclosure.
FIG. 7 is a diagram for describing an operation for identifying the plurality of sub-regions in one region according to an embodiment of the present disclosure.
FIG. 8 is a diagram for describing an operation of segmenting the plurality of regions in an image to have different sizes according to an embodiment of the present disclosure.
FIG. 9 is a flowchart for describing a control method of an electronic apparatus according to an embodiment of the present disclosure.

### [Best Mode]

The present disclosure provides an electronic apparatus for performing image/video quality assessment (I/VQA) in further consideration of a user's region of interest while reducing a computational burden, and a control method thereof.

It should be understood that various embodiments of this document and terms used herein are not intended to limit technical features described in the present disclosure to specific embodiments, and include various modifications, equivalents, and substitutions of the corresponding embodiments.

Throughout the accompanying drawings, similar components are denoted by similar reference numerals.

A singular noun corresponding to an item is intended to include one or more of the items, unless a relevant context clearly indicates otherwise.

In the present disclosure, each of expressions such as "A or B", "at least one of A and B", "at least one of A or B", "A, B, or C", "at least one of A, B, and C", and "at least one of A, B, or C" may include any one of the items enumerated together in the corresponding expressions or all possible combinations thereof.

A term such as "first" or "second" may be used simply to distinguish one element from another element, and does not limit the corresponding component in any other respect (e.g., importance or order).

If a component (for example, a first component) is mentioned to be "coupled to" or "connected to" another component (for example, a second component) with or without terms "operatively or communicatively", it should be understood that the component may be coupled to another component directly (e.g., in a wired manner), in a wireless manner, or through a third component).

It should be understood that terms "include", "have" or the like specify the presence of features, numerals, steps, operations, components, parts, or combinations thereof, mentioned in the specification, and do not preclude the presence or addition of one or more other features, numerals, steps, operations, components, parts, or combinations thereof.

If a component is referred to as being "connected", "coupled", "supported", or "in contact" with another component, it includes not only a case where the components are directly connected, coupled, supported, or in contact with each other, but also a case where the components are indirectly connected, coupled, supported, or in contact with each other through a third component.

If a component is referred to be disposed "on" another component, it includes not only a case where the component is in contact with another component, but also a case where still another component exists between the two components.

A term "and/or" includes a combination of a plurality of related components or any one of the plurality of related components, described herein.

Hereinafter, the operation principles and embodiments of the present disclosure are described with reference to the accompanying drawings.

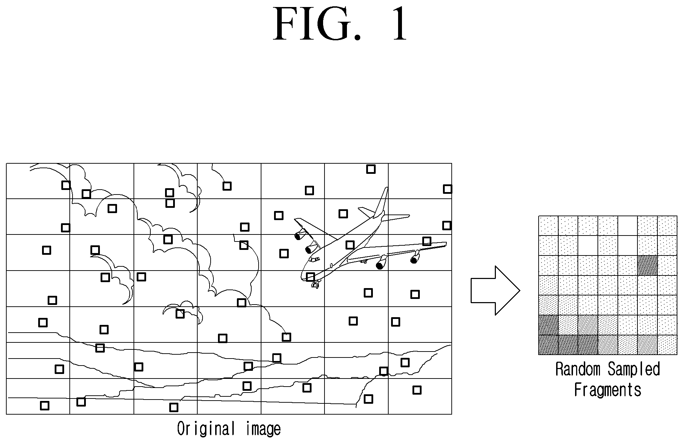

FIG. 1 is a diagram for describing image/video quality assessment (I/VQA) to assist in understanding the present disclosure.

An image/video quality assessment (I/VQA) technique may be a method for predicting a video quality. The I/VQA technique may include a full-reference video quality assessment (FR-I/VQA) technique for analyzing a difference between an original image and a degraded image, and a noreference video quality assessment (NR-I/VQA) technique for determining the quality with only the degraded image.

Specific examples of the FR-I/VQA technique may include a peak signal-to-noise ratio (PSNR), a structural similarity index measure (SSIM), a multi-scale structural similarity index measure (MS-SSIM), a feature similarity index measure (FSIM), and a most apparent distortion (MAD). However, research on the NR-I/VQA technique is actively conducted due to a limitation of the FR-I/VQA technique that requires the original image.

The initial NR-I/VQA technique uses a method of predicting the quality for a specific distortion based on a hand-crafted feature, and is successful in a certain region by using the hand-crafted feature. However, this technique has a limitation for an in-the-wild video.

Recently, the NR-I/VQA technique is also developed significantly in accordance with the development of a deep neural network. However, end-to-end learning becomes difficult due to running time and memory issues as a resolution is increased.

To solve this problem, a method using a pre-trained model, a method using naive cropping, and a method using resizing are studied. However, the cropping method and the resizing method have large feature losses, and the method using a pre-trained model has a loss in terms of accuracy because the method fails to fully train the model.

Fragment-based spatio-temporal image/video quality assessment (FAST-I/VQA), a dual-objective video evaluation resource (DOVER), fast assessment spatio-temporal image/video quality assessment (FASTER-I/VQA), or the like developed later introduces a concept of a fragment using a grid mini patch (GMS). For example, as shown in FIG. 1, the new technique may segment an image into a plurality of regions (grids), identify a sub-region (fragment) in each of the plurality of regions, and identify an image quality by using only the sub-regions identified from the plurality of regions. It is thus possible to reduce a processing time, make the end-to-end learning possible, and improve performance, thus enabling the effective NR-I/VQA for all the resolutions.

However, in case of configuring the sub-regions, random sampling may be performed for each of the plurality of regions, and the performance may thus be changed based on the selected sample, and the performance of the NR-I/VQA may be lower if a meaningless sample is selected. In particular, due to the random sampling, robustness may be low, and all the sub-regions may have the same weight value even though a region to which human eyes are sensitive may be different for each region.

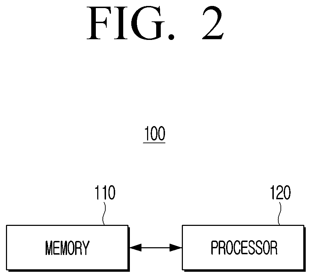

FIG. 2 is a block diagram showing a configuration of an electronic apparatus 100 according to an embodiment of the present disclosure.

The electronic apparatus 100 may be a device for identifying the image quality and be implemented as a television (TV), a desktop personal computer (PC), a laptop, a video wall, a large format display (LFD), a digital signage, a digital information display (DID), a projector display, a smartphone, a tablet PC, or the like.

However, the electronic apparatus 100 is not limited thereto, and may use any device for identifying the image quality.

Referring to FIG. 2, the electronic apparatus 100 may include a memory 110 and a processor 120. However, the electronic apparatus 100 is not limited thereto, and may be implemented by excluding some components.

The memory 110 may refer to hardware for storing information such as data in an electrical or magnetic form for the processor 120 or the like to access the data. For this purpose, the memory 110 may be implemented as at least one hardware among a non-volatile memory, a volatile memory, a flash memory, a hard disk drive (HDD), a solid state drive (SSD), a random access memory (RAM), a read only memory (ROM), or the like.

The memory 110 may store at least one instruction necessary for operating the electronic apparatus 100 or the processor 120. Here, the instruction is a code unit indicating the operation of the electronic apparatus 100 or the processor 120, and may be written in a machine language, which is a language that a computer is able to understand.

The memory 110 may store data in units of bits or bytes which may represent characters, numbers, images, or the like. For example, the memory 110 may store a neural network model.

The memory 110 may be accessed by the processor 120, and the processor 120 may perform the readout, recording, correction, deletion, update, or the like of the instruction, an instruction set, or the data.

The processor 120 may control overall operations of the electronic apparatus 100. In detail, the processor 120 may be connected to each component of the electronic apparatus 100 to thus control the overall operations of the electronic apparatus 100. For example, the processor 120 may be connected to a component such as the memory 110 or a display (not shown), and control the operation of the electronic apparatus 100.

The processor 120 may be at least one processor. Here, at least one processor may include at least one of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. At least one processor may control one of other components of the electronic apparatus 100 or any combination thereof, and perform an operation related to communication or data processing. At least one processor may execute at least one program or instruction stored in the memory 110. For example, at least one processor may perform a method according to an embodiment of the present disclosure by executing at least one instruction stored in the memory 110.

If the method according to an embodiment of the present disclosure includes a plurality of operations, the plurality of operations may be performed by one processor or may be performed by the plurality of processors. For example, a first operation, a second operation, and a third operation may be performed by the method according to an embodiment. In this case, the first operation, the second operation, and the third operation may all be performed by the first processor. Alternatively, the first operation and the second operation may be performed by the first processor (for example, a general-purpose processor), and the third operation may be performed by a second processor (for example, an artificial intelligence-only processor). For example, a process of quantizing the neural network model according to an embodiment of the present disclosure may be performed by the general-purpose processor, and a process of training or inferring the quantized neural network model may be performed by the artificial intelligence-only processor.

At least one processor may be implemented as a single core processor including a single core, or may be implemented as at least one multicore processor including multicores (for example, homogeneous multicores or heterogeneous multicores). If at least one processor is implemented as the multicore processor, each of the multicores included in the multicore processor may include a processor internal memory such as a cache memory or an on-chip memory, and a common cache shared by the multicores may be included in the multicore processor. In addition, each of the multicores (or some of the multicores) included in the multicore processor may independently read and perform a program instruction for implementing the method according to an embodiment of the present disclosure, or all (or some) of the multicores may be linked to each other to read and perform the program instruction for implementing the method according to an embodiment of the present disclosure.

If the method according to an embodiment of the present disclosure includes the plurality of operations, the plurality of operations may be performed by one core among the multicores included in the multicore processor, or may be performed by the multicores. For example, if the first operation, the second operation, and the third operation are performed by the method according to an embodiment, the first operation, the second operation, and the third operation may all be performed by a first core included in the multicore processor. Alternatively, the first operation and the second operation may be performed by the first core included in the multicore processor, and the third operation may be performed by a second core included in the multicore processor.

In the embodiments of the present disclosure, at least one processor may indicate a system-on-chip (SoC) in which at least one processor and other electronic components are integrated, the single core processor, the multicore processor, or the core included in the single core processor or the multicore processor. Here, the core may be implemented as the CPU, the GPU, the APU, the MIC, the DSP, the NPU, the hardware accelerator, the machine learning accelerator, or the like. However, the embodiments of the present disclosure are not limited thereto. However, for convenience of description, the operation of the electronic apparatus 100 may be described below using an expression, "the processor 120".

The processor 120 may acquire a saliency map corresponding to a saliency value of each of a plurality of pixels included in the first image through a first neural network model. For example, the processor 120 may acquire the saliency map representing the saliency value of each of the plurality of pixels included in the first image by inputting the first image into the first neural network model. Here, the first neural network model may be a model acquired by learning a plurality of first sample images and a plurality of sample saliency maps respectively corresponding to the plurality of first sample images. Each of the plurality of sample saliency maps may be acquired based on a plurality of user gazes for the first sample images respectively corresponding to the plurality of sample saliency maps.

That is, the saliency map may include information on "a degree to which the user gazes is directed" at each pixel in the image. For example, if a user sees the image, a region to which the gaze is mainly directed may have a large pixel value in the saliency map.

The processor 120 may segment the first image into the plurality of regions (grids). For example, the processor 120 may segment the first image into the plurality of regions of 7×7, the plurality of regions may all have the same size, and each region may be referred to as the grid.

However, the processor 120 is not limited thereto, and may segment the first image into the plurality of regions based on at least one of the resolution, aspect ratio, type, or the saliency map of the first image. Alternatively, the processor 120 may segment the first image into the plurality of regions for at least some regions among the plurality of regions to have different sizes.

The processor 120 may identify a plurality of first sub-regions (fragments) respectively from the plurality of regions included in the first image based on the saliency map. For example, the processor 120 may identify a portion of each of the plurality of regions as the first sub-region based on the saliency values of the pixels respectively included in the plurality of regions.

For convenience of description, the description first describes a method for identifying the first sub-region in one region among the plurality of regions. The processor 120 may acquire a first sum value corresponding to each pixel by summing the saliency values of each pixel included in one of the plurality of regions and surrounding pixels of each pixel. For example, the processor 120 may acquire the first sum value for each of 169×169 pixels if one region among the plurality of regions has a resolution of 200×200 and a size of a region including each pixel and the surrounding pixels of each pixel is assumed to have a resolution of 32×32. Due to the size of the regions being summed, the first sum value may be acquired for 169×169 pixels instead of 200×200 pixels. The processor 120 may identify a pixel corresponding to the largest first sum value among the first sum values corresponding to each pixel as a reference pixel, and identify a region including surrounding pixels of the reference pixel as the first sub-region corresponding to one of the plurality of regions. The processor 120 may apply this method to each of the plurality of regions to thus identify the plurality of first sub-regions respectively corresponding to the plurality of regions. Here, each of the plurality of first sub-regions may be a region to which the user gaze is directed the most in the corresponding region (grid).

The processor 120 may identify the first image quality based on the plurality of first scores corresponding to the plurality of first sub-regions and acquired through a second neural network model. For example, the processor 120 may acquire the plurality of first scores by inputting the plurality of first sub-regions into the second neural network model. Here, the second neural network model may be a model acquired by learning a plurality of second sample images and a plurality of sample scores respectively corresponding to the plurality of second sample images. Each of the plurality of sample scores may be acquired based on a plurality of user scores for the second sample images respectively corresponding to the plurality of sample scores.

In addition, the processor 120 may identify the first image quality based on the plurality of first scores. For example, the processor 120 may identify the first image quality by averaging or summing the plurality of first scores. However, the processor 120 is not limited thereto, and the processor 120 may identify the first image quality by using only the first score within a predetermined range among the plurality of first scores.

The processor 120 may acquire a plurality of second sum values respectively corresponding to the plurality of first sub-regions by summing the saliency values of the pixels respectively included in the plurality of first sub-regions, and acquire the plurality of first scores by inputting the plurality of first sub-regions and the plurality of second sum values into the second neural network model. Here, the second neural network model may be a model trained to consider not only the plurality of first sub-regions but also the plurality of second sum values acquired by summing the saliency values of the pixels respectively included in the plurality of first sub-regions. Through this operation, the degree to which the user gaze is directed to each region may be further considered in a process of identifying the first image quality.

The processor 120 may acquire the plurality of saliency maps respectively corresponding to a plurality of frames through the first neural network model, and may identify one of the plurality of frames as the first image based on the plurality of saliency maps. For example, the processor 120 may acquire the plurality of saliency maps respectively corresponding to the plurality of frames by inputting the plurality of frames into the first neural network model, and identify one of the plurality of frames as the first image based on the plurality of saliency maps. For example, the processor 120 may acquire the plurality of saliency maps respectively corresponding to the plurality of frames by inputting the plurality of frames into the first neural network model, identify the frame having the largest sum value as the first image by summing the saliency values respectively included in the plurality of saliency maps, and identify the first image quality as a quality of the remaining frames.

Meanwhile, the processor 120 is described above as identifying one first sub-region in one region, and is not limited thereto. For example, the processor 120 may acquire a plurality of third sum values respectively corresponding to the plurality of regions by summing the saliency values of the pixels respectively included in the plurality of regions, and identify the additional first sub-region in a region corresponding to the third sum value having a predetermined first size or more among the plurality of third sum values. That is, the processor 120 may identify the plurality of first sub-regions in a region corresponding to the third sum value having the predetermined first size or more among the plurality of third sum values.

The processor 120 may acquire the plurality of third sum values respectively corresponding to the plurality of regions by summing the saliency values of the pixels respectively included in the plurality of regions, and may update the sizes of the plurality of regions based on the plurality of third sum values. For example, the processor 120 may reduce the size of a region having the average value or more of the plurality of third sum values, and may increase the size of a region having a value less than the average value of the plurality of third sum values.

Meanwhile, the description above describes an embodiment in which the processor 120 identifies one frame among the plurality of frames as the first image and identifies the first image quality as the quality of the remaining frames, and the present disclosure is not limited thereto. For example, the first image may be one of the plurality of frames, and the processor 120 may acquire a motion vector based on the first image among the plurality of frames and the second image immediately after the first image, identify a plurality of second sub-regions corresponding to the second image based on the plurality of first sub-regions and the motion vector, acquire a plurality of second scores by inputting the plurality of second sub-regions into the second neural network model, and identify the second image quality based on the plurality of second scores.

In this way, the processor 120 may perform at least one of upscaling or noise removal on the first image based on the first image quality if the first image quality is identified.

Functions related to an artificial intelligence according to the present disclosure may be operated through the processor 120 and the memory 110.

The processor 120 may be at least one processor. Here, at least one processor may be the general-purpose processor such as the central processing unit (CPU), an application processor (AP), or the digital signal processor (DSP), a graphics-only processor such as the graphic processing unit (GPU) or a vision processing unit (VPU), or the artificial intelligence-only processor such as the neural processing unit (NPU).

At least one processor may control input data to be processed based on a pre-defined operation rule or an artificial intelligence model stored in the memory 110. Alternatively, at least one processor may be the artificial intelligence-only processor. In this case, the artificial intelligence-only processor may be designed to achieve a hardware structure specialized to process a specific artificial intelligence model. The pre-defined operation rule or the artificial intelligence model may be provided by the learning.

Here, to be generated by the learning may indicate that a basic artificial intelligence model performs the learning by using a number of learning data, based on a learning algorithm, thereby generating the pre-defined operation rule or the artificial intelligence model, set to perform a desired feature (or purpose). Such learning may be performed by a machine itself in which the artificial intelligence is performed according to the present disclosure, or by a separate server/system. Examples of the learning algorithm may include supervised learning, unsupervised learning, semi-supervised learning, or reinforcement learning, and are not limited thereto.

The artificial intelligence model may include a plurality of neural network layers. The plurality of neural network layers may each have the plurality of weight values, and perform a neural network computation by computation of a previous-layer computation result and the plurality of weight values. The plurality of weight values of the plurality of neural network layers may be optimized by a learning result of the artificial intelligence model. For example, the plurality of weight values may be updated during a learning process to reduce or minimize a loss value or a cost value, acquired from the artificial intelligence model.

The artificial neural network may include a deep neural network (DNN), and include, for example, convolutional neural network (CNN), the deep neural network (DNN), a recurrent neural network (RNN), a restricted Boltzmann machine (RBM), a deep belief network (DBN), a bidirectional recurrent deep neural network (BRDNN), a generative adversarial network (GAN), or a deep q-network, and is not limited thereto.

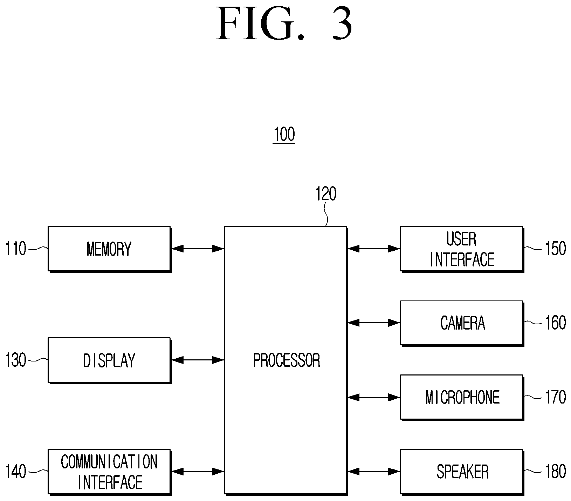

FIG. 3 is a block diagram showing a detailed configuration of the electronic apparatus 100 according to an embodiment of the present disclosure.

The electronic apparatus 100 may include the memory 110 and the processor 120. In addition, referring to FIG. 3, the electronic apparatus 100 may further include a display 130, a communication interface 140, a user interface 150, a camera 160, a microphone 170, and a speaker 180. The description omits detailed descriptions of the components shown in FIG. 3 that overlap with the components shown in FIG. 2.

The display 130 is a component for displaying content, and may be implemented as any of various types of displays such as a liquid crystal display (LCD), an organic light emitting diode (OLED) display, or a plasma display panel (PDP). The display 130 may also include a driving circuit, a backlight unit, and the like, which may be implemented in a form such as an a-si thin film transistor (TFT), a low temperature poly silicon (LTPS) TFT, or an organic TFT (OTFT). Meanwhile, the display 130 may be implemented as a touch screen combined with a touch sensor, a flexible display, a three-dimensional (3D) display, or the like.

The communication interface 140 may be a component for communicating with various types of external devices by using various types of communication methods. For example, the electronic apparatus 100 may communicate with the server through the communication interface 140.

The communication interface 140 may include a wirelessfidelity (Wi-Fi) module, a Bluetooth module, an infrared communication module, a wireless communication module, or the like. Here, each communication module may be implemented in the form of at least one hardware chip.

The Wi-Fi module and the Bluetooth module may respectively perform the communication in Wi-Fi and Bluetooth manners. In case of using the Wi-Fi module the Bluetooth module, the communication interface 140 may first transmit and receive various connection information, such as a service set identifier (SSID), a session key, and the like, and connect the communication by using the connection information to thus transmit and receive various information. The infrared communication module may perform the communication based on infrared data association (IrDA) technology for transmitting data in a short distance in the wireless manner by using an infrared ray between visible and millimeter waves.

In addition to the above-described communication manners, another communication module may include at least one communication chip performing the communication on the basis of various wireless communication standards such as zigbee, third generation (3G), third generation partnership project (3GPP), long term evolution (LTE), LTE advanced (LTE-A), fourth generation (4G), and fifth generation (5G).

Alternatively, the communication interface 140 may include a wired communication interface such as a high definition multimedia interface (HDMI), a display port (DP), Thunderbolt, a universal serial bus (USB), a red-green-blue (RGB) port, a D-subminiature (D-SUB), or a digital visual interface (DVI).

In addition, the communication interface 140 may include at least one of wired communication modules for performing the communication by using a local area network (LAN) module, an Ethernet module, a pair cable, a coaxial cable, an optical fiber cable, or the like.

The user interface 150 may be implemented as a button, a touch pad, a mouse, a keyboard, or the like, or may be implemented as a touch screen capable of performing both a display function and a manipulation input function. Here, the button may be any of various types of buttons such as a mechanical button, a touch pad, a wheel, or the like, which is disposed in any region, such as the front surface portion, side surface portion, or rear surface portion of a body appearance of the electronic apparatus 100.

The camera 160 may be a component for capturing a still or moving image. The camera 160 may capture the still image at a specific time point, and may also continuously capture the still images.

The camera 160 may include a lens, a shutter, an aperture, a solid-state imaging device, an analog front end (AFE), and a timing generator (TG). The shutter may adjust a time at which light reflected from a subject enters the camera 160, and the aperture may mechanically increase or decrease a size of an opening through which light enters, thereby controlling an amount of light incident on the lens. The solid-state imaging device may output the image by photoelectric charge as an electrical signal in case that light reflected by the subject is accumulated as the photoelectric charge. The TG may output a timing signal for reading out pixel data of the solid-state imaging device, and the AFE may sample and digitize the electrical signal output from the solid-state imaging device.

The microphone 170 may be a component for receiving sound and converting the same into an audio signal. The microphone 170 may be electrically connected to the processor 120, and receive the sound under control of the processor 120.

For example, the microphone 170 may be integrated with the electronic apparatus 100 in the upper, front, or side direction of the electronic apparatus 100. Alternatively, the microphone 170 may be disposed at a remote control or the like separate from the electronic apparatus 100. In this case, the remote control may receive the sound through the microphone 170, and provide the received sound to the electronic apparatus 100.

The microphone 170 may include various components such as a microphone collecting the sound in an analog form, an amplifier circuit amplifying the collected sound, an analog to digital (A/D) conversion circuit sampling the amplified sound and converting the same into a digital signal, a filter circuit removing a noise component from the converted digital signal, and the like.

Meanwhile, the microphone 170 may be implemented in the form of a sound sensor, and may use any method for collecting the sound.

The speaker 180 may be a component for outputting various notification sounds, an audio message, or the like, as well as various audio data processed by the processor 120.

As described above, the electronic apparatus 100 may have improved image quality identification performance because the electronic apparatus 100 identifies the image quality by identifying the plurality of first sub-regions from the plurality of regions using the saliency map for the image.

In addition, the electronic apparatus 100 may identify the image quality using a reduced processing time because the electronic apparatus 100 identifies the image quality based on the plurality of first sub-regions, each of which is a portion of each of the plurality of regions, rather than the entire image.

Meanwhile, the first neural network model is described above as outputting the saliency map corresponding to the input image, and is not limited thereto. For example, the first neural network model may be trained to output information on the plurality of first sub-regions corresponding to the input image. In this case, the processor 120 may input the first image into the first neural network model to thus identify the plurality of first sub-regions.

In addition, the processor 120 is described above as inputting the plurality of first sub-regions into the second neural network model, and is not limited thereto. For example, the processor 120 may input one image including the plurality of first sub-regions into the second neural network model to thus acquire one score, and identify the first image quality based on one score.

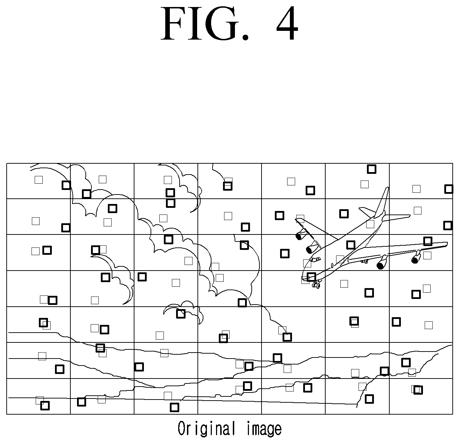

Hereinafter, the description describes an operation of the electronic apparatus 100 in more detail with reference to FIGS. 4 to 8. For convenience of description, individual embodiments are described with reference to FIG. 4 to 8. However, the individual embodiments described with reference to FIGS. 4 to 8 may be implemented in any combination thereof.

FIG. 4 is a diagram for describing a difference in methods for identifying the sub-region according to an embodiment of the present disclosure.

The processor 120 may segment the first image into the plurality of regions (grids), and identify the plurality of first sub-regions (fragments) respectively from the plurality of regions based on the saliency map corresponding to the first image.

For example, as shown in FIG. 4, the processor 120 may segment the first image (original image) into the plurality of regions of 7×7, and identify the plurality of first sub-regions (square regions indicated by thin solid lines) respectively from the plurality of regions based on the saliency map corresponding to the first image.

Segmenting the first image into the plurality of regions and identifying the first sub-region in each region is the same as in a conventional method. However, in the conventional method, the first sub-region is randomly selected, such as the square region indicated by thick solid lines in FIG. 4.

On the other hand, according to the present disclosure, the first sub-region may be selected based on the saliency map, such as the square region indicated by the thin solid lines to thus reflect the degree to which the user gaze is directed, thereby improving the image quality identify performance.

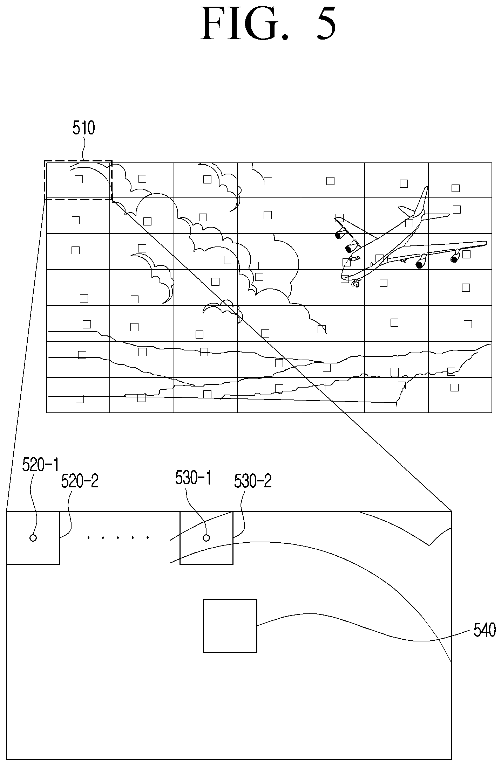

FIG. 5 is a diagram for describing the method for identifying a sub-region based on the saliency map according to an embodiment of the present disclosure.

The processor 120 may identify the plurality of first sub-regions from the plurality of regions included in the first image based on the saliency map corresponding to the first image.

The processor 120 may acquire the first sum value corresponding to each pixel by summing the saliency value of each pixel included in one of the plurality of regions and the surrounding pixels of each pixel, and identify a region including the reference pixel corresponding to the largest first sum value among the first sum values corresponding to the respective pixels and the surrounding pixels of the reference pixel as the first sub-region corresponding to one of the plurality of regions.

For example, the processor 120 may segment the first image into the plurality of regions of 7×7 as shown in FIG. 5, and identify the first sub-region from a first region 510 from the plurality of regions. For example, the processor 120 may identify a first pixel 520-1 included in the first region 510, and acquire the first sum value corresponding to the first pixel 520-1 by summing saliency values of pixels included in a region 520-2 including surrounding pixels of the first pixel 520-1. In addition, the processor 120 may identify a second pixel 530-1 included in the first region 510, and acquire the first sum value corresponding to the second pixel 530-1 by summing saliency values of pixels included in a region 530-2 including surrounding pixels of the second pixel 530-1. The processor 120 may repeat this method to thus acquire the first sum value for most of the pixels included in the first region 510. The processor 120 may omit this operation for some of the pixels included in the first region 510. For example, the processor 120 may omit this operation for the pixels above and to the left of the first pixel 520-1. For convenience of description, the center of the region 520-2 including the surrounding pixels of the first pixel 520-1 is shown as a reference in FIG. 5, and is not limited thereto. For example, an upper left pixel of the region 520-2 may be the reference.

The processor 120 may identify a region 540 corresponding to the largest first sum value from the plurality of first sum values as the first sub-region corresponding to the first region 510.

The description describes the method for identifying the first sub-region in the first region 510 with reference to FIG. 5. However, the processor 120 may identify the first sub-region in the remaining regions of the first image through the same operation. That is, the processor 120 may identify the plurality of first sub-regions of 7×7 from the plurality of regions of 7×7.

A size of the first sub-region may be smaller than a region including the first sub-region among the plurality of regions, and may be a predetermined size. However, the present disclosure is not limited thereto, and the processor 120 may change the size of the first sub-region. For example, the processor 120 may change the size of the first sub-region based on at least one of a resolution of the first image, hardware performance of the electronic apparatus 100, or a resource state of the electronic apparatus 100. Alternatively, the processor 120 may determine the size of the first sub-region corresponding to each of the plurality of regions based on each size of the plurality of regions included in the first image.

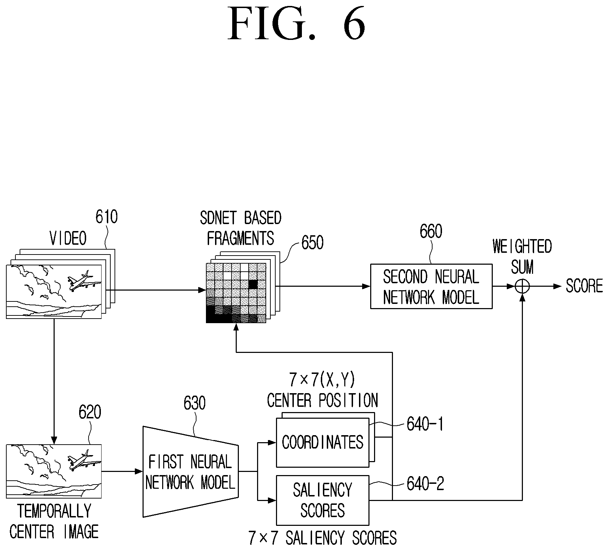

FIG. 6 is a diagram for describing an overall method for identifying the image quality according to an embodiment of the present disclosure.

The processor 120 may identify the first image from a video. For example, the processor 120 may identify a temporally intermediate frame among the plurality of frames included in a video 610 as a first image 620, as shown in FIG. 6.

However, the present disclosure is not limited thereto, and the processor 120 may segment the video 610 for each scene, and identify the temporally intermediate frame in each scene as the first image 620. Alternatively, the processor 120 may acquire the plurality of saliency maps corresponding to the plurality of frames by inputting the plurality of frames included in the video 610 respectively into the first neural network model, and identify one of the plurality of frames as the first image 620 based on the plurality of saliency maps. For example, the processor 120 may acquire the plurality of saliency maps respectively corresponding to the plurality of frames by inputting the plurality of frames included in the video 610 respectively into the first neural network model, acquire the sum value corresponding to each of the plurality of frames by summing all the saliency values respectively included in the saliency maps, and identify the frame having the largest sum value as the first image 620.

The processor 120 may acquire the saliency map representing the saliency value of each of a plurality of pixels included in the first image 620 by inputting the first image 620 into a first neural network model 630. The processor 120 may acquire, from the saliency map, coordinates 640-1 of the plurality of first sub-regions corresponding to a plurality of regions included in the first image 620, and a plurality of second sum values 640-2 corresponding to the plurality of first sub-regions. Here, the processor 120 may acquire each of the plurality of second sum values 640-2 by summing the saliency values of the pixels respectively included in the corresponding first sub-regions.

The processor 120 may acquire one image including the plurality of first sub-regions. Alternatively, the processor 120 may acquire one image including the plurality of first sub-regions to which the weight value is applied by weighting the second sum value 640-2 corresponding to each of the plurality of first sub-regions.

The processor 120 may acquire a plurality of images 650 by acquiring one image from each of the remaining frames among the plurality of frames based on the coordinates 640-1 of the plurality of first sub-regions. Here, each of the plurality of images may have the weight value applied thereto based on the plurality of second sum values 640-2.

The processor 120 may acquire the score for each of the plurality of images 650 by inputting each of the plurality of images 650 into the second neural network model 660, and accumulate the same to identify a quality of the video 610. Here, the processor 120 may input each of the plurality of images 650 into the second neural network model, and the present disclosure is not limited thereto. For example, the processor 120 may input each of the plurality of first sub-regions respectively included in the plurality of images 650 into the second neural network model.

For convenience of description, FIG. 6 shows that the processor 120 acquires the plurality of scores respectively corresponding to the plurality of frames, and the present disclosure is not limited thereto. For example, the processor 120 may identify the quality of the video 610 by using some or all of the plurality of frames included in the video. For example, the processor 120 may identify only a quality of the first image 620, and identify the quality of the first image 620 as the quality of the video 610. In addition, the processor 120 may identify the number of frames for identifying the quality of the video 610 among the plurality of frames included in the video 610 based on at least one of a resolution of the video 610, the hardware performance of the electronic apparatus 100, or the resource state of the electronic apparatus 100.

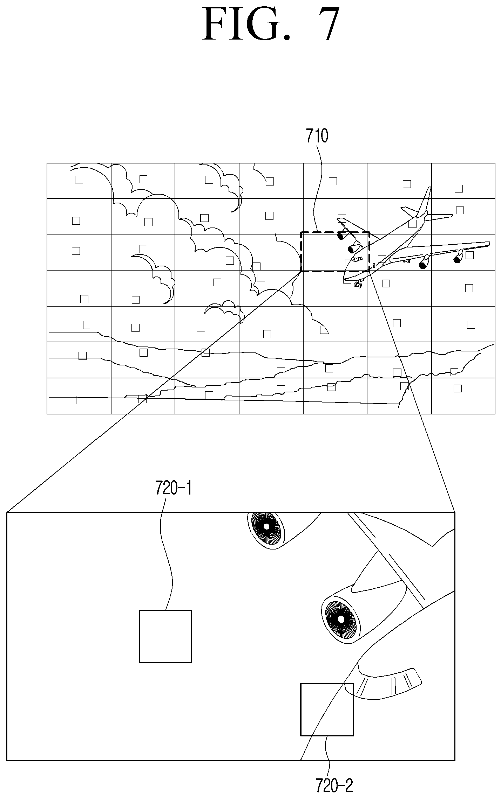

FIG. 7 is a diagram for describing an operation for identifying the plurality of sub-regions in one region according to an embodiment of the present disclosure.

The processor 120 is described above as identifying one first sub-region in one region from the plurality of regions, and is not limited thereto. For example, the processor 120 may acquire the plurality of third sum values respectively corresponding to the plurality of regions by summing the saliency values of the pixels respectively included in the plurality of regions, and identify the additional first sub-region in the region corresponding to the third sum value having the predetermined first size or more among the plurality of third sum values.

For example, as shown in FIG. 7, the processor 120 may acquire the third sum value corresponding to one region 710 by summing the saliency values of pixels included in one region 710 among the plurality of regions, and identify the plurality of first sub-regions in one region 710 if the third sum value has the predetermined first size or more.

As described with reference with FIG. 5, in the method for identifying the plurality of first sub-regions, the first sum value corresponding to each pixel included in one region 710 may be acquired, and the plurality of first sub-regions may be identified based on a size of the first sum value.

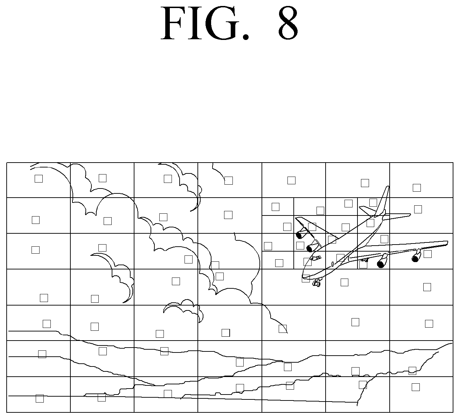

FIG. 8 is a diagram for describing an operation of segmenting the plurality of regions in an image to have different sizes according to an embodiment of the present disclosure.

Each of the plurality of regions is described above as having the same shape and size, and is not limited thereto. For example, the processor 120 may acquire the plurality of third sum values respectively corresponding to the plurality of regions by summing the saliency values of the pixels respectively included in the plurality of regions, and may update the sizes of the plurality of regions based on the plurality of third sum values.

For example, as shown in FIG. 8, the processor 120 may additionally segment a region corresponding to the third sum value that has a predetermined second size or more among the plurality of third sum values. The processor 120 may identify the first sub-region in each additionally segmented region. Here, the first sub-region in an unsegmented region and the first sub-region in the additionally segmented region may have the same size.

Alternatively, the processor 120 may reduce the size of a region that is the average value or more of the plurality of third sum values, and may increase the size of a region that is less than the average value of the plurality of third sum values.

This operation may improve the image identification performance by identifying the first image quality through the region to which the user gazes are more directed.

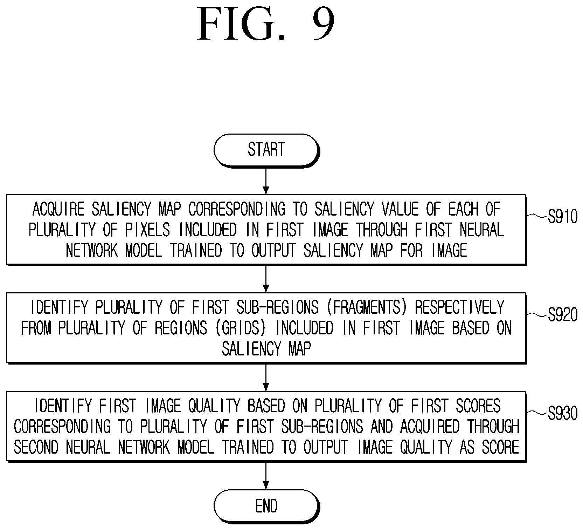

FIG. 9 is a flowchart for describing a control method of an electronic apparatus according to an embodiment of the present disclosure.

The method may first include acquiring a saliency map corresponding to a saliency value of each of a plurality of pixels included in a first image through a first neural network model trained to output the saliency map for an image (S910). In addition, the method may include identifying a plurality of first sub-regions (fragments) respectively from a plurality of regions (grids) included in the first image based on the saliency map (S920). In addition, the method may include identifying a first image quality based on a plurality of first scores corresponding to the plurality of first sub-regions and acquired through a second neural network model trained to output an image quality as a score (S930).

In addition, in the identifying of the first sub-region (S920), a portion of each of the plurality of regions may be identified as the first sub-region based on the saliency values of the pixels respectively included in the plurality of regions.

In addition, in the identifying of the first sub-region (S920), a first sum value corresponding to each pixel may be acquired by summing the saliency values of each pixel included in one of the plurality of regions and surrounding pixels of each pixel, and a region including a reference pixel corresponding to the largest first sum value among the first sum values corresponding to the respective pixels and surrounding pixels of the reference pixel may be identified as the first sub-region corresponding to one of the plurality of regions.

In addition, the method may further include acquiring a plurality of second sum values respectively corresponding to the plurality of first sub-regions by summing the saliency values of the pixels respectively included in the plurality of first sub-regions, wherein in the identifying of the first image quality (S930), the plurality of first scores may be acquired by inputting the plurality of first sub-regions and the plurality of second sum values into the second neural network model.

In addition, the method may further include acquiring the plurality of saliency maps respectively corresponding to a plurality of frames through the first neural network model, and identifying one of the plurality of frames as the first image based on the plurality of saliency maps.

In addition, the method may further include acquiring a plurality of third sum values respectively corresponding to the plurality of regions by summing the saliency values of the pixels respectively included in the plurality of regions, wherein in the identifying of the plurality of first sub-regions (S920), the additional first sub-region may be identified in a region corresponding to the third sum value having a predetermined size or more among the plurality of third sum values.

In addition, the method may further include acquiring the plurality of third sum values corresponding to the plurality of regions by summing the saliency values of the pixels respectively included in the plurality of regions, and updating the sizes of the plurality of regions based on the plurality of third sum values.

In addition, the first image may be one of the plurality of frames, and the control method may further include acquiring a motion vector based on the first image among the plurality of frames and the second image immediately after the first image, identifying a plurality of second sub-regions corresponding to the second image based on the plurality of first sub-regions and the motion vector, acquiring a plurality of second scores by inputting the plurality of second sub-regions into the second neural network model, and identifying a second image quality based on the plurality of second scores.

In addition, the method may further include performing at least one of upscaling or noise removal on the first image based on the first image quality.

In addition, the first neural network model may be a model acquired by learning a plurality of first sample images and the plurality of sample saliency maps respectively corresponding to the plurality of first sample images, and the second neural network model may be a model acquired by learning a plurality of second sample images and a plurality of sample scores respectively corresponding to the plurality of second sample images.

In addition, each of the plurality of sample saliency maps may be acquired based on a plurality of user gazes for the first sample images respectively corresponding to the plurality of sample saliency maps, and each of the plurality of sample scores may be acquired based on a plurality of user scores for the second sample images respectively corresponding to the plurality of sample scores.

According to the various embodiments of the present disclosure as described above, the electronic apparatus may have improved image quality identification performance because the electronic apparatus identifies the image quality by identifying the plurality of first sub-regions from the plurality of regions using the saliency map for the image.

In addition, the electronic apparatus may identify the image quality using the reduced processing time because the electronic apparatus identifies the image quality based on the plurality of first sub-regions, each of which is a portion of each of the plurality of regions, rather than the entire image.

Meanwhile, according to an embodiment of the present disclosure, the various embodiments described above may be implemented in software including an instruction stored in a machine-readable storage medium (for example, a computer-readable storage medium). A machine may be an apparatus that invokes the stored instruction from the storage medium, may be operated based on the invoked instruction, and may include the electronic apparatus (e.g., electronic apparatus A) according to the disclosed embodiments. If the instruction is executed by the processor, the processor may directly perform a function corresponding to the instruction or other components may perform the function under the control of the processor. The instruction may include codes generated or executed by a compiler or an interpreter. The machine-readable storage medium may be provided in the form of a non-transitory storage medium. Here, the term "non-transitory" indicates that the storage medium is tangible without including a signal, and does not distinguish whether data are semi-permanently or temporarily stored in the storage medium.

In addition, according to an embodiment of the present disclosure, the method according to the various embodiments described above may be provided by being included in a computer program product. The computer program product may be traded as a product between a seller and a purchaser. The computer program product may be distributed in a form of the machine-readable storage medium (for example, a compact disc read only memory (CD-ROM)), or may be distributed online through an application store (for example, PlayStore^{™}). In case of the online distribution, at least portions of the computer program product may be at least temporarily stored in the storage medium such as a memory of a server of a manufacturer, a server of an application store, or a relay server or be temporarily created.

In addition, according to an embodiment of the present disclosure, the various embodiments described above may be implemented in a computer-readable recording medium or a recording medium readable by a similar device by using software, hardware, or a combination of software and hardware. In some cases, the embodiments described in the specification may be implemented by the processor itself. In software implementation, the embodiments such as the procedures and functions described in the specification may be implemented by separate software modules. Each of the software modules may perform one or more functions and operations described in the specification.

Meanwhile, computer instructions for performing processing operations of the machine according to the various embodiments described above may be stored in a non-transitory computer-readable medium. The computer instructions stored in the non-transitory computer-readable medium allow a specific machine to perform the processing operations in the machine according to the various embodiments described above if the instructions are executed by a processor of the specific machine. The non-transitory computer-readable medium is not a medium that stores data therein for a while, such as a register, a cache, or a memory, and indicates a medium that semi-permanently stores data therein and is readable by the machine. A specific example of the non-transitory computer-readable medium may include a compact disk (CD), a digital versatile disk (DVD), a hard disk, a blu-ray disk, a universal serial bus (USB), a memory card, a read only memory (ROM), or the like.

In addition, each of the components (e.g., modules or programs) according to the various embodiments described above may include one entity or a plurality of entities, and some of the corresponding sub-components described above may be omitted or other sub-components may be further included in the various embodiments. Alternatively or additionally, some of the components (e.g., modules or programs) may be integrated into one entity, and may perform functions performed by the respective corresponding components before being integrated in the same or similar manner. Operations performed by the modules, the programs, or other components according to the various embodiments may be executed in a sequential manner, a parallel manner, an iterative manner, or a heuristic manner, at least some of the operations may be performed in a different order or be omitted, or other operations may be added.

Although the embodiments are shown and described in the present disclosure as above, the present disclosure is not limited to the above-mentioned specific embodiments, and may be variously modified by those skilled in the art to which the present disclosure pertains without departing from the gist of the present disclosure as claimed in the accompanying claims. These modifications should also be understood to fall within the scope and spirit of the present disclosure.

## Claims

1. An electronic apparatus comprising:
at least one memory storing:
a first neural network model trained to output a saliency map for an image, and
a second neural network model trained to output a quality score for an image; and
at least one processor connected to the at least one memory and configured to:
obtain the saliency map including a saliency value of each pixel of a plurality of pixels included in a first image through the first neural network model based on the first image,
identify a plurality of first sub-regions respectively corresponding to a plurality of regions included in the first image based on the saliency map, and
obtain the quality score for the first image through the second neural network model based on the identified plurality of first sub-regions, wherein the quality score is based on a plurality of first quality scores respectively corresponding to the identified plurality of first sub-regions.

2. The electronic apparatus of claim 1, wherein the at least one processor is further configured to identify a portion of each region of the plurality of regions as a first sub-region of the plurality of first sub-regions corresponding to the plurality of regions based on saliency values of pixels respectively included in each region of the plurality of regions.

3. The electronic apparatus of claim 2, wherein the at least one processor is further configured to:
for each region of the plurality of regions,
determine a plurality of first sum values corresponding to each pixel respectively included in each region, each first sum value of the plurality of first sum values being a sum of a saliency value of the pixel and saliency values of surrounding pixels of each pixel, and
identify a sub-region of each region that includes a reference pixel corresponding to a largest first sum value among the plurality of first sum values as the first sub-region corresponding to each region.

4. The electronic apparatus of claim 1, wherein
the second neural network model is further trained to output the plurality of first quality scores based on the plurality of first sub-regions and a plurality of second sum values being input to the second neural network model, and
the at least one processor is further configured to:
determine the plurality of second sum values respectively corresponding to the plurality of first sub-regions, each second sum value of the plurality of second sum values being a sum of saliency values of pixels included in a respectively corresponding first sub-region of the plurality of first sub-regions, and
obtain the quality score for the first image through the second neural network model based on the identified plurality of first sub-regions and the plurality of second sum values.

5. The electronic apparatus of claim 1, wherein the at least one processor is further configured to:
obtain a plurality of saliency maps respectively corresponding to a plurality of frames through the first neural network model, and
identify a frame of the plurality of frames as the first image based on the plurality of saliency maps output by the first neural network model.

6. The electronic apparatus of claim 1, wherein the at least one processor is further configured to:
determine a plurality of third sum values respectively corresponding to the plurality of regions, each third sum value of the plurality of third sum values being a sum of saliency values of pixels included in a respectively corresponding region of the plurality of regions, and
identify as an additional first sub-region a region of the plurality of regions corresponding to a third sum value of the plurality of third sum values being a predetermined size or more among.

7. The electronic apparatus of claim 1, wherein the at least one processor is further configured to:
determine a plurality of third sum values respectively corresponding to the plurality of regions, each third sum value of the plurality of third sum values being a sum of saliency values of pixels included in a respectively corresponding region of the plurality of regions, and
update a size of a region of the plurality of regions based on the plurality of third sum values.

8. The electronic apparatus of claim 1, wherein
the first image is a first frame of a plurality of frames,
a second image is a second frame of the plurality of frames that occurs immediately after the first frame of the plurality of frames, and
the at least one processor is further configured to:
determine a motion vector based on the first image and the second image,
identify a plurality of second sub-regions of the second image corresponding to the plurality of first sub-regions and the motion vector, and
obtain a quality score for the second image through the second neural network model based on the identified plurality of second sub-regions.

9. The electronic apparatus of claim 1, wherein the at least one processor is further configured to perform at least one of upscaling or noise removal on the first image based on the quality score for the first image.

10. The electronic apparatus of claim 1, wherein
the first neural network model learns a plurality of first sample images and a plurality of sample saliency maps respectively corresponding to the plurality of first sample images, and
the second neural network model learns a plurality of second sample images and a plurality of sample scores respectively corresponding to the plurality of second sample images.

11. The electronic apparatus of claim 1, wherein
each sample saliency map of a plurality of sample saliency maps is based on a plurality of user gazes for first sample images respectively corresponding to the plurality of sample saliency maps, and
each sample score of a plurality of sample scores is based on a plurality of user scores for second sample images respectively corresponding to the plurality of sample scores.

12. A control method of an electronic apparatus storing therein a first neural network model trained to output a saliency map for an image, and a second neural network model trained to output a quality score for an image, and the electronic apparatus further including at least one processor, the control method comprising:
by the at least one processor,
obtaining the saliency map including a saliency value of each pixel of a plurality of pixels included in a first image through the first neural network model based on a first image,
identifying a plurality of first sub-regions respectively corresponding to a plurality of regions included in the first image based on the saliency map, and
obtaining the quality score for the first image through the second neural network model based on the identified plurality of first sub-regions, wherein the quality score is based on a plurality of first quality scores respectively corresponding to the identified plurality of first sub-regions.

13. The control method of claim 12, wherein in the identifying the plurality of first sub-regions further includes:
by the at least one processor,
identifying a portion of each region of the plurality of regions as a first sub-region of the plurality of first sub-regions corresponding to the plurality of regions based on saliency values of pixels respectively included in each region of the plurality of regions.

14. The control method of claim 13, wherein in the identifying the first sub-region further includes:
by the at least one processor,
for each region of the plurality of regions,
determining a plurality of first sum values corresponding to each pixel respectively included in each region, each first sum value of the plurality of first sum values being determined by summing a saliency values of each pixel and saliency values of surrounding pixels of each pixel, and
identifying a sub-region of each region that includes a reference pixel corresponding to a largest first sum value among the plurality of first sum values as the first sub-region corresponding to each region.

15. The control method of claim 12, wherein the second neural network model is further trained to output the plurality of first quality scores based on the plurality of first sub-regions and a plurality of second sum values being input to the second neural network model, the control method further including:
by the at least one processor,
determining the plurality of second sum values respectively corresponding to the plurality of first sub-regions, each second sum value of the plurality of second sum values being determined by summing saliency values of pixels included in a respectively corresponding first sub-region of the plurality of first sub-regions, and
the obtaining the quality score for the first image further includes:
obtaining the quality score for the first image through the second neural network model based on the identified plurality of first sub-regions and the plurality of second sum values.
